Europäisches Patentamt

European Patent Office

Office européen des brevets

(11) Publication number: **0 257 690**
**A2**

## (12) EUROPEAN PATENT APPLICATION

(21) Application number: 87201518.5

(22) Date of filing: 11.08.87

(51) Int. Cl.⁴: **F16K 31/383**

(30) Priority: 12.08.86 JP 124089/86 U

(43) Date of publication of application:
02.03.88 Bulletin 88/09

(84) Designated Contracting States:
BE CH DE ES FR GB GR IT LI NL SE

(71) Applicant: T L V Co., Ltd.
881 Nagasuna Noguchi-cho
Kakogawa-shi Hyogo 675(JP)

(72) Inventor: Oike, Tadashi
17-1 Nishigawara Kakogawa-cho
Kakogawa-shi Hyogo 675(JP)
Inventor: Yokoyama, Takeshi
238-3 Agata-cho
Ono-shi Hyogo 675-13(JP)

(74) Representative: Smulders, Theodorus A.H.J.
et al
Vereenigde Octrooibureaux Nieuwe Parklaan
107
NL-2587 BP 's-Gravenhage(NL)

(54) **Piston structure for a pressure reducing valve.**

㊙ A piston structure of a pressure reducing valve
(I) in which a piston (20) is formed in its side surface
with at least one annular groove, a piston ring (2I,
23) received in said groove, said piston (20) being
slidably movable in a cylinder (22) for controlling the
opening and closing of a main valve (I8), the operat-
ing pressure of said piston (20) being regulated by a
pilot valve (36) which operates in response to the
secondary pressure, the outer peripheral edge (25,
3I, 43) of upper surface of said piston (20) being
located in the outer peripheral direction lower than a
point (27, 35, 4I) located on a circle having about the
same radius as the bottom surface of said annular
piston ring receiving groove or a point located more
inside than said point (27, 35, 4I) to prevent the
upper corner of the piston from collision with the
inner wall of the cylinder (22) when the piston (20) is
tilted by fluid jetted from the main valve (I4, I8).

FIG. 1

EP 0 257 690 A2

## Piston structure for a pressure reducing valve.

### BACKGROUND OF THE INVENTION

#### Field of the Invention

This invention relates to a pressure reducing valve mounted in a piping system for steam, compressed air, etc. to maintain the secondary side fluid pressure at a certain set level and the invention particularly relates to a piston structure for a type of pressure reducing valve in which the primary side fluid pressure acts on the upper surface of the piston through a pilot valve which is opened and closed in response to the secondary side pressure and the piston is operated by a pressure difference between said upper surface and the lower surface of the piston, the latter being exposed to the secondary side pressure, said piston being arranged to operatively open and close a main valve.

This type of pressure reducing valve permits the primary side fluid introduced through the pilot valve to the upper surface of the piston to act on the upper surface of the piston while the fluid escapes through a gap between the piston and a piston receiving cylinder to regulate the fluid pressure acting on the upper surface of the piston.

#### Description of the Prior Art

In the prior art, as disclosed in Japanese Utility Model Laid-Open No. Sho 45-32717, the main valve controlling piston is provided on the side with two annular grooves in which piston rings are disposed such that when the piston is inserted into a cylinder the piston rings expand radially to uniformly contact the inner surface of the cylinder.

The piston may be tilted by fluid jetted from the main valve so that the upper corner area of the piston interferes with the inner peripheral surface of the cylinder, resulting in malfunction because smooth sliding is impeded. To prevent such malfunction, the two piston grooves should be arranged as far as possible from each other so that it is difficult for the piston to tilt within the cylinder. Such enlarging of the spacing between the two piston grooves inevitably leads to thinning of the upper wall between the upper annular groove and the upper surface of the piston.

In certain circumstances a vertical vibration can be induced onto the piston and when such clattering or rattling occurs, the thin walled portion at the outer peripheral edge of the upper surface of the piston is deformed towards the groove by the repeated severe collisions of this upper portion of the tilted piston with the inner wall of a main body so that the piston ring is becoming pinched in its groove. As a result, the gap between the piston and the cylinder becomes uneven which leads to impediment of the smooth sliding of the piston within the cylinder, resulting in malfunction of the pressure reducing valve.

### SUMMARY OF THE INVENTION

The said problems are solved in that in a type of pressure reducing valve wherein a piston having in its side surface at least one annular groove, a piston ring received in said groove, said piston being slidably movable in a cylinder for opening and closing a main valve and wherein the operating pressure of said piston is regulated by a pilot valve which operates in response to the secondary pressure according to the invention, the outer peripheral edge of the upper surface of the piston is made lower than a point on said upper surface, located on the same radius as the bottom surface of the said piston ring receiving annular groove formed in the side surface of said piston or a point located on a lesser radius.

Even if the upper portion of piston, when tilted, collides severely with the inner wall of the main body, the outer peripheral edge of the upper surface of piston being formed so low it cannot abut against the inner wall of main body. Thus the peripheral upper edge portion of the piston, even if thin walled, is not therefore deformed so that the piston ring is never pinched in.

### BRIEF DESCRIPTION OF THE DRAWINGS

A better understanding of this invention will now be had by referring to the accompanying drawings in which:

Fig. I is a sectional view showing an embodiment of a pressure reducing valve according to this invention;

Fig. 2 is an enlarged sectional view showing a piston in Fig. I;

Figs. 3 and 4 are enlarged fragmentary sectional views showing other embodiments of the piston.

## DESCRIPTION OF THE PREFERRED EMBODIMENTS

Embodiment I (see Figs. I and 2)

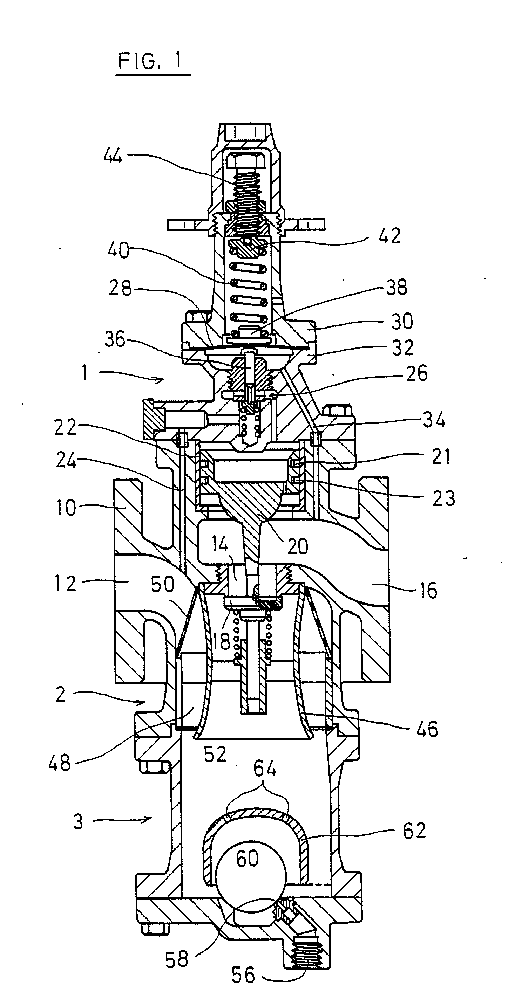

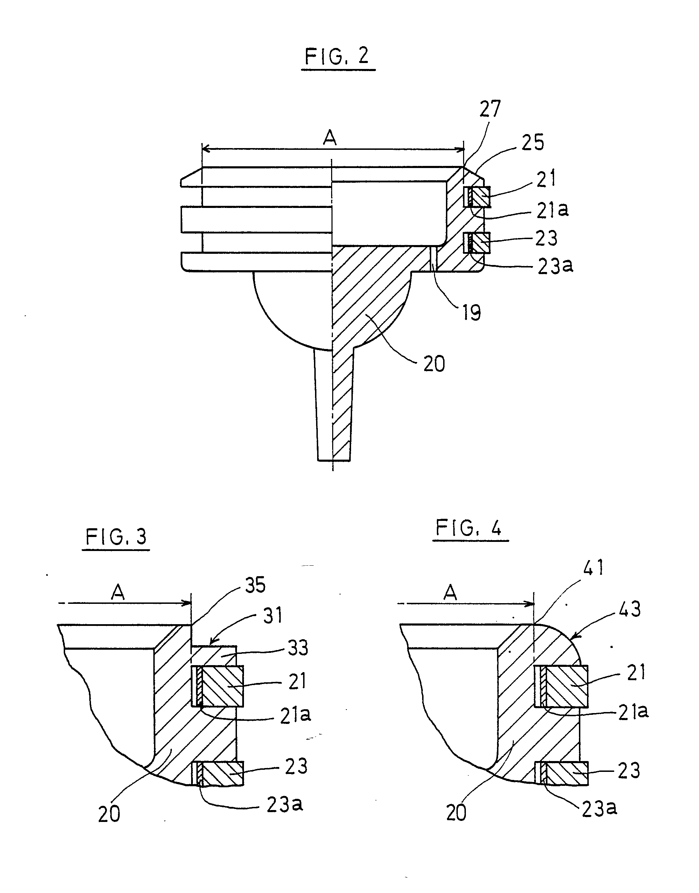

Fig. I is a sectional view showing a pressure reducing valve for steam in which a first embodiment of piston is built (see Fig. 2).

This pressure reducing valve comprises a pressure reducing valve section I, a gas-water separator section 2 and a. drain valve section 3. A valve casing I0 is formed with an inlet I2, a valve port I4 and an outlet I6. The inlet I2 is connected to the primary side high pressure fluid source and the outlet I6 to the secondary side low pressure region. The valve port I4 is formed within a valve seat member.

A piston 20 is formed having a side surface with annular grooves in which are disposed piston rings 2I, 23. The piston 20 carrying the piston rings 2I, 22 is slidably inserted into a cylinder 22 with elastic members 2Ia, 23a urging the piston rings from the radially outside. A piston rod extends through the valve port I4 and is adapted to abut against a main valve I8 to open an orifice I9 affording communication between the upper and lower side of the piston.

The piston is provided on the upper surface with a tapered surface 25 inclined from a point 27 on the circumference of a circle having the same diameter A as the bottom of the piston ring receiving annular groove, and downwardly diverging in the outer peripheral direction. The thus formed angle between this tapered surface 25 and the upper surface of the piston such that the tapered surface does not abut against the inner wall of main body facing the upper portion of piston even if the piston is tilted within the cylinder 22.

In a space above the inlet I2 and the piston 20, i.e. the primary pressure path 24 communicating with a piston chamber is disposed a pilot valve 26.

A diaphragm 28 is mounted with its outer peripheral edge being sandwiched between flanges 30, 32. A space below the diaphragm 28 communicates with the outlet I6 through a secondary pressure path 34. Also, a head end face of a valve stem 36 of a pilot valve 26 bears centrally against the lower surface of the diaphragm 28. The valve stem 36 is pressed against the diaphragm 28 by the primary side fluid pressure and by an elastic force of a coiled spring biasing the valve body of the pilot valve 26.

On the upper surface of the diaphragm 28 is mounted a spring seat 38. A coiled spring 40 for setting a pressure is disposed between the spring seat 38 and a spring carrier 42 and an end of an adjusting screw 44 threadingly engaging the valve casing I0 is adapted to press against the spring carrier 42.

By turning the adjusting screw 44 the spring carrier 42 is displaced to vary the depressing force of the pressure setting spring 40 onto the diaphragm 28. The diaphragm 28 is bent while loaded by the elastic force of the pressure setting spring 40 in response to the secondary side pressure acting on the lower surface of diaphragm to displace the valve stem 36 for opening or closing the pilot valve 26. As a result, the primary side fluid pressure is introduced into the piston chamber to drive the piston 20, displace the main valve I8 and allow fluid from the inlet I2 to flow through the valve port I4 to the outlet I6. The valve port I4 is opened automatically when the secondary side fluid pressure is reduced and closed when said pressure is increased.

The upper portion of an annular space 48 between a cylindrical partition wall member 46 mounted below the valve port I4 and the valve casing I0 surrounding said member 46 communicates with the inlet I2 through a conical screen 50 and the lower portion of said space 48 communicates with the upper portion of a drain valve chamber 52. Also, the upper portion of the drain valve chamber 52 communicates with the valve port I4 through the central passage of the partition wall member 46. In the annular space 48 is disposed a baffle means 54 formed of an inclined wall.

Thus, when the valve port I4 is opened, the fluid at the inlet I2 is diverted by the baffle means 54 when passing through the annular space 48 and is urged outside, abuts against the inner wall of surrounding valve casing, and flows down into the drain valve chamber 52. Light gas turns around the central portion, advances from the central passage of the partition wall member 46 to the valve port I4 and passes through the valve port to flow to the outlet I6.

A drain valve port 58 is formed at the bottom of the drain valve chamber 52 and communicates with a drain port 56. A spherical valve float 60 is displaceably provided at said bottom and is covered with a float cover 62. A vent hole 64 is provided in the upper portion of the float cover 62.

Thus, the valve float 60 floats up or sinks according to the water level in the drain valve chamber 52 to open or close the drain valve port 58 and automatically drains water collected in the drain valve chamber 52.

Embodiment 2 (see Fig. 3)

In this embodiment the piston 20 is provided on its upper surface with an annular step portion 3l extending from a point 35 on a circle having the same diameter A as the bottom of the piston ring receiving annular groove, in the outer peripheral direction. The piston ring 2l is supported by a disk-like portion 33. The description of operation of this piston for the pressure reducing valve is omitted since it is same as that of the piston 20 in the embodiment I.

Embodiment 3 (see Fig. 4)

The piston 20 in this embodiment is provided on its upper part with a spherical surface 43 extending from the start point 4l on a circle having the same diameter A as the bottom of the piston ring receiving annular groove, in the outer peripheral direction. The description of operation of the spherical surface for the pressure reducing valve is omitted since it is same as that of the piston 20 in the embodiment I.

In another embodiment different from the ones earlier disclosed, the upper surface of piston may be made flat and the annular groove may be provided in the inner wall surface of main body opposed to the outer peripheral edge of said upper piston surface.

This invention has the following specific effects:

The piston is not deformed and the piston ring is not pinched even under influence of shocks such as during clattering or the like. Thus, the interval between two piston rings can be provided so large that the piston does not interfere with the cylinder, but keeps sliding smoothly for a long time even under the somewhat tilted conditions.

While only certain embodiments of the present invention have been described, it will be apparent to those skilled in the art that various changes and modifications may be made therein without departing from the spirit and scope of the present invention as claimed.

**Claims**

In a type of pressure reducing valve (I) wherein a piston (20) having in its side surface at least one annular groove, a piston ring (2l, 23) received in said groove, said piston being slidably movable in a cylinder (22) for opening and closing a main valve (I8) and wherein the operating pressure of said piston (20) is regulated by a pilot valve (36) which operates in response to the secondary pressure, characterized in that the outer peripheral edge (25, 3l, 43) of the upper surface of the piston (20) is located in the outer peripheral direction lower than a point (27, 35, 4l) on said upper surface, located on the same radius as the bottom surface of the said piston ring receiving annular groove formed in the side surface of said piston (20) or a point located more inside than said point.

## FIG. 1

FIG. 2

27
A
25
21
21a
23
23a
19
20

FIG. 3

A
35
31
33
21
21a
23
23a
20

FIG. 4

A
41
43
21
21a
23
23a
20